(19) Europäisches Patentamt
European Patent Office
Office européen des brevets

(11) Publication number: 0 086 841 B1

(12) # EUROPEAN PATENT SPECIFICATION

(45) Date of publication of patent specification: 22.02.89

(51) Int. Cl.$^4$: C 22 B 11/00, G 03 C 11/00, G 03 C 11/24

(21) Application number: 82902466.0

(22) Date of filing: 20.08.82

(86) International application number: PCT/JP82/00327

(87) International publication number: WO 83/00630 03.03.83 Gazette 83/06

(54) **PROCESS FOR RECOVERING SILVER AND PHOTOSENSITIVE MATERIAL BASE FROM PHOTOSENSITIVE MATERIAL BY UTILIZING MICROORGANISM.**

(30) Priority: 21.08.81 JP 131781/81

(43) Date of publication of application: 31.08.83 Bulletin 83/35

(45) Publication of the grant of the patent: 22.02.89 Bulletin 89/08

(84) Designated Contracting States: BE CH FR LI NL

(56) References cited:
FR-A- 413 500
FR-A- 613 074
GB-A- 363 989
JP-A-56 072 139

Derwent Abstracts, vol. D, no. 31, issued 9.9.1981, abstr. M25
Chem. Abstracts, vol. 95 (1981), p. 349, abstr. no. 95:129236x
Chem. Abstracts, vol. 89, (1978), no. 171794d

CHEMICAL ABSTRACTS, vol. 93. 1980, page 365, abstract no. 245147b COLUMBUS OHIO (US) L.I. EL'PINER: " Use of ultrasound for improving the antimicrobial effect of disinfectants"

(73) Proprietor: ZAIDANHOUZIN NAGOYASHI KOGYOGIJUTSU SHINKOKYOKAI
Nagoyashi Kogyo Kenkyujo 24, Rokubancho 3-chome
Atsuta-ku,Nagoya-shi Aichi 456 (JP)

(72) Inventor: EGUCHI, Kanemitsu
32-1, Tokugawacho 1-chome Higashi-ku
Nagoya-shi Aichi 461 (JP)
Inventor: KANIE, Teruyuki
86, Narumicho Sakucho Midori-ku
Nagoya-shi Aichi 458 (JP)

(74) Representative: Shipton, Gordon Owen et al
W.P. THOMPSON & CO. Coopers Building
Church Street
Liverpool L1 3AB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 086 841 B1

## Description

The present invention relates to a method of recovering both silver and paper base from photoprinting papers by utilizing micro-organisms and more specifically to a method of recovering them from those photoprinting papers which have a gelatin layer on their surfaces which contains fine silver crystals.

Background art

Although the recovery of both silver and film base from photofilms using bacteria has been proposed in Japanese Patent No. 5,672,139, and such use of bacteria for recovering silver from waste photographic papers has been reported in Chem. Abst. Vol. 89 1978 (89:171794d), methods have not so far existed that both silver and a reutilizable base can be recovered from photoprinting papers.

In general in the methods that have been adopted silver is recovered by incinerating photoprinting papers. These methods however, give rise to problems of public nuisance, because the generation of offensive odour and dust will occur in disposing of the incinerated materials, and many chemical agents and processes are required in order to separate a pure silver from the resulting incinerated product, because ashes and silver are mixed in the incinerated product.

Another method of recovering silver from the surface of photofilms, employed a high concentration of sodium hydroxide. In this method it turned out to be impossible to separate only silver by filtration, etc., because it was accompanied by an alkaline drainage, and several kinds of additives were mixed in the gelatin layers on the film to increase an efficiency of the films. Further, the recovery of a film base is impossible in this method.

Recently, photoprinting papers having a gelatin layer containing fine silver crystals have become widely used and have arisen for disposal, both from industrial and domestic uses. If both silver and a paper base were recoverable from such used photoprinting papers, it would give rise to the advantages of conservation of resources and the avoidance of the aforementioned public nuisance.

An object of the invention is to provide a method of recovering both silver and a reutilizable paper base from such photoprinting papers utilizing biological reactions without any secondary public nuisance.

This object is achieved in accordance with the present invention by providing a method of recovering both silver and sensitive material base from a sensitive material having a gelatin layer containing fine silver crystals which comprises exposing sensitive material in a mist or liquid which contains a mixture of aerobic or anaerobic micro-organisms including gelatin activated-mutant bacteria thereby degrading the gelatin layer and, after degradation of the gelatin layer, separating silver from the sensitive material by the irradiation of the sensitive material with supersonic waves, characterised in that:

(i) the sensitive material base is photoprinting paper,

(ii) the sensitive material is subjected to the action of the micro-organisms for a period of up to twenty minutes, and

(iii) after separation of the silver from the sensitive material the sensitive material base is washed with water to recover the photoprinting paper base.

Brief description of the drawings

Fig. 1 shows the result of the process of example 1 (Comparative) in which photoprinting papers are treated with CLEAN TEAM for 30 minutes at 35°C.

Fig. 2 shows the result of the process of example 2 (Comparative) in which photoprinting papers are treated with PERFECT CLEAN for 30 minutes at 35°C.

Fig. 3 shows the result of the process of example 3 (Invention) in which photoprinting papers are treated with hot water for different times, and then with PERFECT CLEAN for different times; the times for the treatments with hot water and with PERFECT CLEAN are (a) two minutes, and ten minutes, (b) ten minutes, and ten minutes, (c) two minutes, and 20 minutes, and (d) ten minutes, and 20 minutes, respectively.

Fig. 4 shows the degradation rates of gelatin when photoprinting papers are treated with PERFECT CLEAN.

Fig. 5 shows the result of the process of example 4 (Invention) in which photoprinting papers are treated with BAR'S BIO-MIX-B.

Fig. 6 shows the result of the process of example 5 (Invention) in which photoprinting papers are treated with hot water, and then with BAR'S BIO-MIX-B for different times; the times for the treatments with hot water and with BAR'S BIO-MIX-B are (a) 20 seconds, and two minutes, (b) one minute and 30 seconds, and one minute and 30 seconds, (c) 20 seconds, and three minutes and 15 seconds, and (d) two minutes, and three minutes and 15 seconds, respectively.

Best mode for carrying out the invention

The invention involves the degradation of gelatin layers on the surfaces of photoprinting papers, which layers contain fine silver crystals by using a mixture of aerobic or anaerobic micro-organisms which take and degrade organic compounds such as proteins, starches, fats and oils, and celluloses, particularly activated mutants of gelatin metabolic microbe which take gelatin as a nutrient. In this specification, the gelatin metabolic microbe means the one that prefers to eat organic gelatin and does not eat but separates

inorganic silver wiwithout intake of it into the body. The activated mutant of gelatin metabolic microbe means the bacteria which are artificially activated by irradiating with X-rays, α-rays, γ-rays, or ultraviolet rays, etc.

In general when aerobic bacteria re employed,

$$\underset{\substack{|\\ NH_2\\ \text{(Proteins)}}}{R\cdot CH}\cdot CH_2\cdot COOH \xrightarrow{+O} R\cdot CO\cdot COOH + NH_3$$

or when anaerobic bacteria are employed,

$$HOOC\cdot \underset{\substack{|\\ NH_2\\ \text{(Proteins)}}}{CH}\cdot CH_2\cdot CH_2COOH \rightleftarrows HOOC-\underset{\substack{\|\\ O}}{C}\cdot CH_2\cdot COOH + NH_3$$

gelatin will come to be biologically degraded as the reactions shown above. Therefore, silver can be recovered from the surface of printing papers, by disposing the materials into a liquid or a mist in which these micro-organisms are present.

Moreover, it is possible that the paper base can be recovered without damage, because the base for photoprinting papers will not be degraded by these bacteria. The paper base obtained is capable of being utilized as such.

Any protists are suitable as the micro-organisms which can be applied to the above reactions, so long as they can degrade proteins, starches, fats and oils, and celluloses, etc. But, micro-organisms of significant high degradation powers would be preferable in order to obtain rapid industrial treatments.

Therefore, in the invention, several kinds of micro-organisms were mainly selected which preferred to eat gelatin on the surface of photoprinting papers, and further were mixed with protists such as protozoa and bacteria in order to allow them to have strong survival powers even under adverse conditions.

Moreover, in order to increase the process efficiency by shortening the time for the treatments which have so far taken longer, industrially available activated mutant bacteria of gelatin having a rapid gelatin-eating speed were employed which were artificially produced by irradiation with high energy rays such as X-rays, α-rays, γ-rays, and ultraviolet rays, etc.

Mother of gelatin eating bacteria is microorganisms for producing proteinase as mixture of Bacillus, Aspergillus, Pesulfovbro, Actinomycetes, Pseudomonas, Mycobacteria or the like. In order to artificially convert the bacteria by irradiating with high energy rays, irradiation with ultraviolet rays of wavelength 2537 Å (0.2537 μm) at 25 W for one hour, or with X-ray of 1 krad or 10—100 rem, for example, preferred.

In order to make the time for the treatments shorter, it is desirable to warm the printing papers in hot water to allow the gelatin layers to soften, to give hydrophilic properties to the layers, or to provide nutrients (dissolved in the hot water) for micro-organisms (nitrogens, phosphates, and minerals, etc.) in the layers.

The above treatments make it possible to degrade perfectly the membranes in about five to twenty minutes, although it takes several hours to days when microorganisms previously treated are not employed as shown in the examples described later.

Separation of silver is effected by means of vibration using supersonic waves. The silver so separated is a black fine powder, which will give the possibility of obtaining a pulverized silver by a centrifugal method, a highly purified one by a simple electrolysis treatment, and also by a melting method at 1100°C.

Then, as described earlier, the micro-organisms employed in the invention are mainly composed of a gelatin metabolic microbe, to which protists such as protozoa and bacteria etc., are added. The micro-organisms provide an effective management, because they have such a strong survival power and an increased durability that biological actions such as metabolisms, growth, and proliferation can be carried out even under severe conditions.

Furthermore, a waste fluid consisting of these micro-organisms reduces public nuisance, because it is harmless when drained off without any treatments.

A typical example of definite procedures in the invention is shown below, in which anaerobic micro-organisms are used for the treatment of photoprinting papers.

The first step:

Photoprinting papers are dipped into a 1% solution of sodium phosphate at 80 to 90° for two to ten minutes.

Aims:

(a) to soften the gelatin by heating it,
(b) to give hydrophilic properties to the gelatin
(c) to provide nutrients in the gelatin.

The second step:

The photoprinting papers treated with hot water in the first step, are dipped for 3 to 10 minutes into the fluid in which micro-organisms are mixed (substantially at 35°C).

Aims:

To degrade the gelatin layer.

The third step:

The photoprinting papers, after completion of the second step, are dipped into water. The silver is separated from the base of the photoprinting paper in water by the above referred to vibration method. The silver obtained is a black fine powder. A highly purified silver can be recovered from the water containing the separated silver by the following procedure.

Recovery of silver

The recovery of silver by a physical method is carried out in the following steps:

1. The water containing the separated silver obtained above is dehydrated by centrifugation, etc., to recover a pulverized silver.

2. The pulverized silver recovered in 1, is heated and melted at 1100°C.

A silver mass can be obtained by this method.

The photoprinting paper base from which silver was separated can be recovered simply by washing it with water.

When using aerobic micro-organisms, substantially the same treatment is performed in the air by a spray method as that in the case of using anaerobic micro-organisms in a liquid.

The invention is further explained and illustrated by reference to the following examples.

Example 1 (Comparative)

Photoprinting papers were dipped into 1% suspension of above-mentioned CLEAN TEAM at 35°C for thirty minutes, and then brought into distilled water, followed by irradiating supersonic waves to them for four minutes to separate silver. As shown in Fig. 1, silver could be partly separated (about 10%).

Example 2 (Comparative)

As an activated mutant of gelatin metabolic microbe, PERFECT CLEAN sold by Sweeley Co., Ltd. was employed. Photoprinting papers were dipped into 1% suspension of it at 35°C for thirty minutes, and then brought into a distilled water, followed by irradiating supersonic waves to them for four minutes to separate silver. As shown in Fig. 2, most of the silver could be separated (about 90%).

Example 3 (Invention)

It was ascertained that the time for treatment could be shortened, if a gelatin layer on photoprinting papers were degraded by micro-organisms, after the layer was softened by previously dipping the photoprinting papers in hot water.

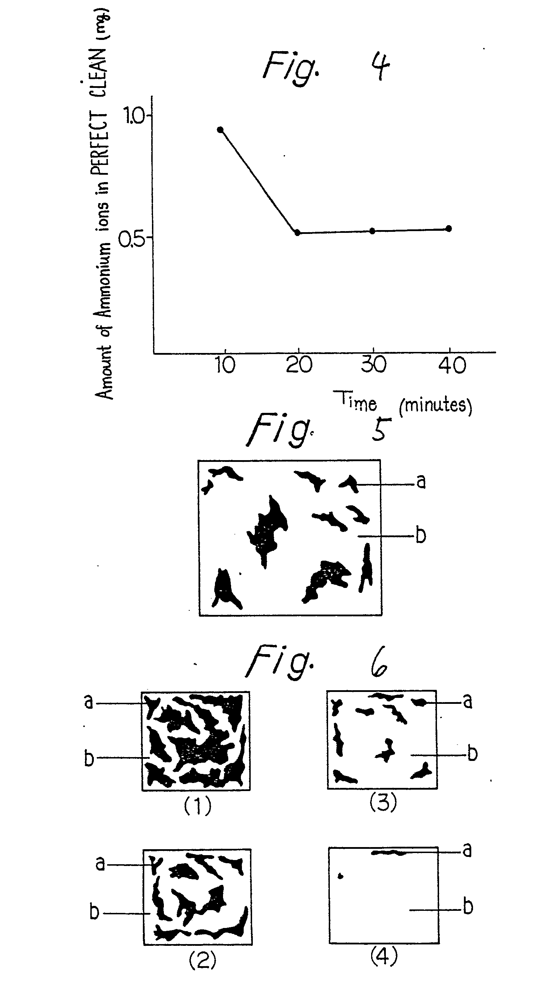

Into the solution used in Example 2, the photoprinting papers treated with hot water were dipped and then irradiated with supersonic waves for four minutes to separate silver. Fig. 3 shows the result that the treatment was carried out with hot water and with PERFECT CLEAN; (1) for two minutes, and ten minutes, (2) for ten minutes, and ten minutes, (3) for two minutes, and twenty minutes, and (4) for ten minutes, and twenty minutes, respectively. The separation rates of silver were about 20%, 50%, 95% and 100%, respectively.

In order to ascertain the degradation time of gelatin layers, hourly changes in the amount of ammonium ions, i.e. degradation products, were measured. The results shown in Fig. 4 were obtained by measuring the amount of ammonium ions during the experiment described in Example 3. From this figure, it is evident that the ions can be degraded in about twenty minutes.

Furthermore, it was also ascertained that if photoprinting papers were treated to separate silver by irradiation with supersonic waves and simultaneous treatment with micro-organisms, the depressive effect on the activation of micro-organisms by accumulated silver is depressed, so that the time for treatment becomes shorter to a half.

Example 4 (Invention)

As an activated mutant of gelatin metabolic microbe, BAR's bio-MIX-B (brand name) of RELIANCE BROOKS INC., being a U.S.A. enterprise was employed. Photoprinting papers were dipped into 1% suspension of it at 35°C for five minutes and ten seconds and then brought into distilled water, followed by irradiation with supersonic waves for one minute to separate silver. As shown in Fig. 2 about 90% of silver could be separated.

Example 5

Into the solution used in Example 4, photoprinting papers treated with hot water were dipped, and then irradiated with supersonic waves for one minute to separate silver. Fig. 6 shows the result that the photoprinting papers were treated with hot water and BAR'S BIO-MIX-B; the times for these treatments

were (1) twenty seconds, and two minutes, (2) one minute and thirty seconds, and one minute and thirty seconds, (3) twenty seconds, and three minutes and fifteen seconds, and (4) two minutes, and three minutes and fifteen seconds, respectively. The separation rates of silver were about 20%, 50%, 95% and 100%, respectively.

In comparative experiments between PERFECT CLEAN and BAR'S BIO-MIX-B, the following results were obtained.

The experiments were carried out in the way that photoprinting papers of 2×2 cm in size were put into 25 ml of a distilled water at 25°C containing 1 g of several bacteria which were put into 200 ml beakers and the beakers were vibrated, thereby comparing the separation rates of silver.

The case of photoprinting papers

(a) When PERFECT CLEAN was employed, the separation rates of silver was finished in eighty minutes.

(b) When BAR'S BIO-MIX-B was employed, the separation of silver was finished in twenty minutes.

From these results, it proved that BAR'S BIO-MIX-B degraded a gelatin about four times as rapidly as PERFECT CLEAN, did because BAR'S BIO-MIX-B was the mutant bacterium which degrade only proteins.

**Claims**

1. Method of recovering both silver and sensitive material base from a sensitive material having a gelatin layer containing fine silver crystals which comprises exposing sensitive material in a mist or liquid which contains a mixture of aerobic or anaerobic micro-organisms including gelatin activated-mutant bacteria thereby degrading the gelatin layer and, after degradation of the gelatin layer, separating silver from the sensitive material by the irradiation of the sensitive material with supersonic waves, characterised in that:

(i) the sensitive material base is photoprinting paper,

(ii) the sensitive material is subjected to the action of the micro-organisms for a period of up to twenty minutes, and

(iii) after separation of the silver from the sensitive material the sensitive material base is washed with water to recover the photoprinting paper base.

2. A method as claimed in claim 1, characterised in that the degrading of the gelatin layer and the separation of silver by irradiation of the supersonic waves onto the sensitive material are effected concurrently.

3. A method as claimed in claim 1 or 2, characterised by further comprising the step of treating the sensitive material in hot water before exposing it in the mist or liquid.

**Patentansprüche**

1. Verfahren zur Wiedergewinnung von Silber und empfindlichem Basismaterial aus einem empfindlichen Material, das eine feine Silberkristalle enthaltende Gelatineschicht aufweist, wobei das empfindliche Material einem Nebel oder einer Flüssigkeit ausgesetzt wird, die eine Mischung aus aerobischen oder anaerobischen Mikrooganismen einschließlich gelatineaktivierter mutierender Bakterien enthält, und wobei nach dem Abbau der Gelatineschicht das Silber durch Bestrahlen des empfindlichen Materials mit Überschallwellen vom empfindlichen Material abgetrennt wird, dadurch gekennzeichnet, daß

a) das empfindliche Basismaterial Lichtabzugpapier ist,

b) das empfindliche Material der Wirkung der Mikroorganismen während eines Zeitraums von bis zu 20 Minuten unterworfen wird und

c) das empfindliche Material nach dem Abtrennen des Silbers vom empfindlichen Material mit Wasser gewaschen wird, um das Lichtabzugbasispapier wiederzugewinnen.

2. Verfahren nach Anspruch 1, dadurch gekennzeichnet, daß das Abbauen der Gelatineschicht und das mittels Bestrahlung des empfindlichen Materials durch Ultraschallwellen erfolgende Abtrennen des Silbers gleichzeitig durchgeführt werden.

3. Verfahren nach Anspruch 1 oder 2, dadurch gekennzeichnet, daß das empfindliche Material in Heißwasser behandelt wird, bevor es dem Nebel oder der Flüssigkeit ausgesetzt wird.

**Revendications**

1. Procédé pour récupérer à la fois l'argent et le support de matière sensible d'une matière sensible comportant une couche de gélatine contenant de fins cristaux d'argent, qui consiste à exposer la matière sensible à un brouillard ou un liquide qui contient un mélange de microorganismes aérobies ou anaérobies comprenant des bactéries de gélatine mutante activées, pour dégrader ainsi la couche de gélatine, et après dégradation de la couche de gélatine, à séparer l'argent de la matière sensible en irradiant la matière sensible par des ondes ultrasonores, caractérisé par le fait que:

(i) le support de matière sensible est un papier de tirage photographique,

(ii) on soumet la matière sensible à l'action des microorganismes pendant une période de vingt minutes au plus, et

(iii) après avoir séparé l'argent de la matière sensible, on lave à l'eau le support de matière sensible pour récupérer le support du papier de tirage photographique.

2. Procédé tel que revendiqué dans la revendication 1, caractérisé par le fait que l'on effectue simultanément la dégradation de la couche de gélatine et la séparation de l'argent par irradiation d'ondes ultrasonores sur la matière sensible.

3. Procédé tel que revendiqué dans la revendication 1 ou 2, caractérisé par le fait qu'il comprend de plus l'étape consistant à traiter la matière sensible dans de l'eau chaude avant de l'exposer au brouillard ou au liquide.

Fig. 1

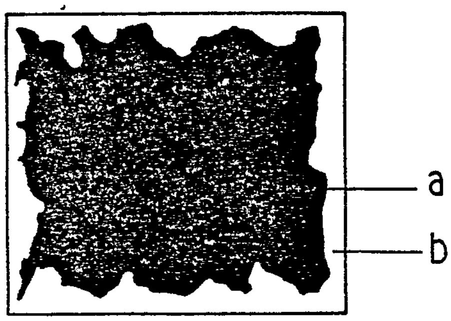


Fig. 2

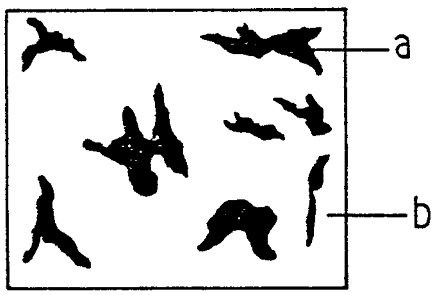


Fig. 3

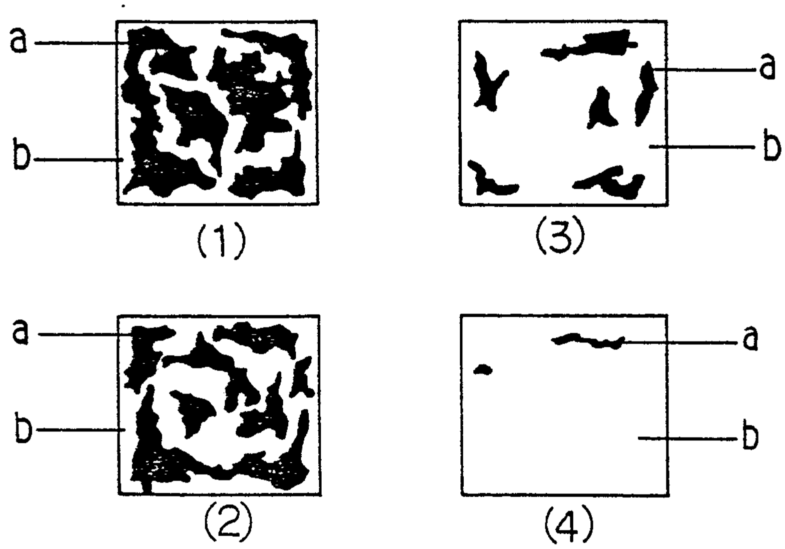

Fig. 4

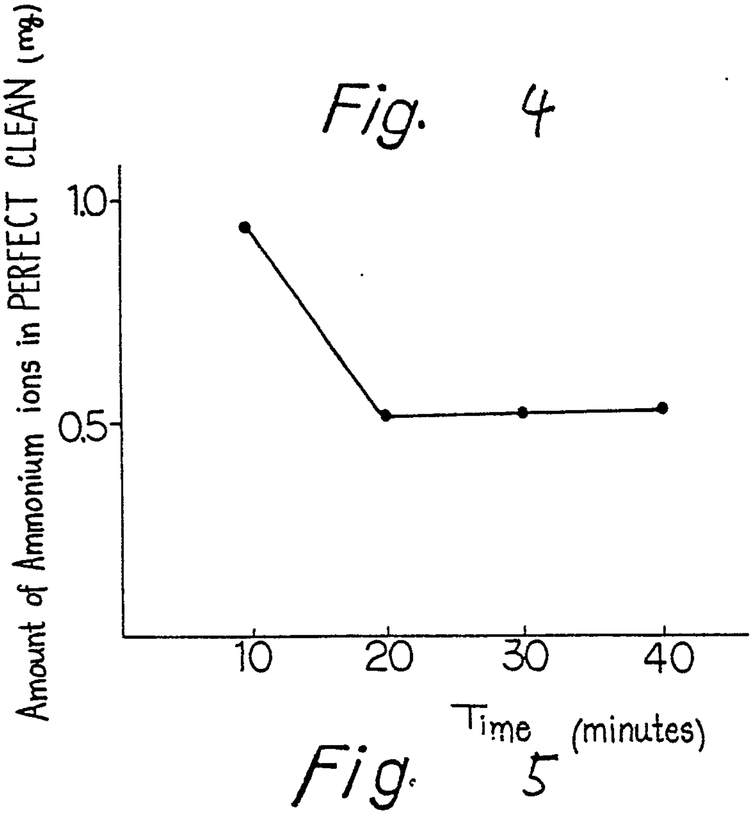


Fig. 5

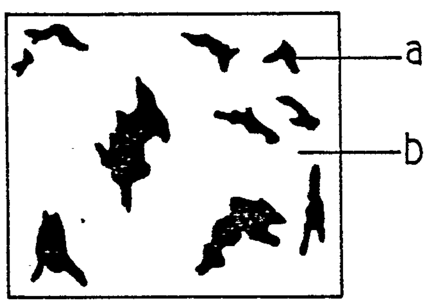


Fig. 6